# FASCICULE DE BREVET EUROPEEN

(11) **EP 4 170 411 B1**
(45) Date de publication et mention de la délivrance du brevet: **15.01.2025**
(21) Numéro de dépôt: 21203857.4
(22) Date de dépôt: 21.10.2021
(51) Int. Cl.: G02B 25/00

(54) **DISPOSITIF GROSSISSANT À GROSSISSEMENT MULTIPLE**
VERGRÖSSERUNGSVORRICHTUNG MIT MEHRFACHER VERGRÖSSERUNG
MAGNIFYING DEVICE WITH MULTIPLE MAGNIFICATION

(43) Date de publication de la demande: 26.04.2023
(73) Titulaire: The Swatch Group Research and Development Ltd, 2074 Marin (CH)
(72) Inventeur: GRECO, Dario, 8405 Winterthur (CH); TORTORA, Pierpasquale, 2000 Neuchâtel (CH); WILLEMIN, Michel, 2515 Prêles (CH)
(74) Mandataire: ICB SA

(56) Documents cités:
- US-A- 2 905 054
- US-A- 3 753 611
- US-A1- 2020 374 429
- US-B2- 6 717 750

## Description

### Domaine technique de l'invention

Le domaine de l'invention concerne l'inspection, la révision et l'entretien des pièces de petites dimensions, comme par exemple les pièces d'horlogerie, et notamment les accessoires permettant de réaliser ces opérations d'inspection, de révision et d'entretien des pièces de petites dimensions et d'horlogerie.

Plus particulièrement, l'invention concerne un dispositif grossissant, tel qu'une loupe monoculaire d'horloger, à grossissement multiple permettant d'observer des composants, par exemple horlogers, de différents ordres de grandeur, avec une unique loupe monoculaire.

### Arrière-plan technologique

Pour les opérations d'inspection, de révision ou encore d'entretien des pièces d'horlogerie, ou encore des articles de joaillerie ou des pièces de petites dimensions, il est connu d'utiliser des dispositifs grossissants pour l'observation des composants, et des éléments de petites dimensions.

Dans le domaine de l'horlogerie, on utilise classiquement des dispositifs grossissants de type loupe monoculaire, appelée également loupe d'horloger.

Ces loupes monoculaires sont de conception très simple et formées d'un corps creux, généralement en matière plastique, et d'une lentille convexe située à une extrémité du corps creux. L'utilisateur peut ainsi observer un élément au travers du corps creux en bénéficiant d'un effet de grossissement dépendant des caractéristiques de la lentille convexe.

Il existe ainsi un grand nombre de loupes monoculaires avec des grossissements différents.

Actuellement, pour pouvoir réaliser des observations de différents ordres de grandeur, il est nécessaire de disposer de plusieurs loupes monoculaires avec des grossissements différents.

Certains fabricants proposent une alternative en proposant une loupe monoculaire à lentilles interchangeables afin de pouvoir modifier le grossissement de la loupe monoculaire. Ainsi, avec une même loupe monoculaire, i.e. un même corps, l'utilisateur peut bénéficier de deux ou plusieurs grossissements en interchangeant la lentille convexe, par démontage par exemple d'une bague de maintien située à une extrémité du corps.

Toutefois, ce type de loupe monoculaire manque de praticité. En effet, il est nécessaire pour l'utilisateur de stocker les différentes lentilles, et de prêter attention à leur propreté ainsi qu'au stockage de celles-ci pour éviter d'éventuels endommagements. Les différentes manipulations des lentilles lors des opérations de montages et de démontages successifs peuvent également occasionner des dommages sur les lentilles.

Enfin, ce type de loupe monoculaire implique des opérations de montages et de démontages qui peuvent être répétées un grand nombre de fois lors des opérations d'inspection, de révision ou encore d'entretien, ce qui est fastidieux et peut être une source d'agacement pour l'utilisateur, qui préfèrera en général disposer d'un jeu de plusieurs loupes monoculaires avec des grossissements différents plutôt que de devoir procéder à des démontages/montages répétitifs et fastidieux des lentilles pour adapter le grossissement à ses besoins.

Une autre solution existante, consiste à superposer une deuxième lentille à celle de la loupe monoculaire pour modifier son grossissement par des moyens d'aimantation ou encore des moyens d'attaches rapides de type clip, pince, etc, permettant de solidariser momentanément la deuxième lentille sur le corps du dispositif grossissant.

Toutefois, cette solution n'est pas davantage satisfaisante pour l'utilisateur car il arrive que les lentilles additionnelles se désolidarisent du corps de la loupe monoculaire lors des différentes manipulations. De plus, cette solution implique également un risque de pollution et un stockage de ces différentes lentilles additionnelles.

On peut également citer le document US 2905054 qui propose une loupe de lecture avec différents grossissements par la superposition de deux lentilles.

Par conséquent, il existe un besoin pour faciliter les opérations d'inspection, de révision et d'entretien des pièces d'horlogerie, notamment lorsqu'il est nécessaire de réaliser des observations de différents ordres de grandeur.

### Résumé de l'invention

Dans ce contexte, l'invention propose un dispositif grossissant à grossissement multiple comportant : une coque externe formant un corps de révolution d'axe de révolution (X-X) et présentant une cavité interne, une première lentille montée au niveau d'une première extrémité de ladite coque externe, ledit dispositif grossissant selon l'invention comportant en outre une deuxième lentille mobile entre une position rétractée et une position déployée dans laquelle ladite deuxième lentille se superpose à ladite première lentille de manière à modifier les caractéristiques optiques du dispositif grossissant.

Selon l'invention, la deuxième lentille est solidaire d'un chariot mobile actionnable par l'utilisateur via une glissière de chariot et la deuxième lentille est logée au niveau de ladite cavité interne de ladite coque externe aussi bien dans sa position rétractée que dans sa position déployée.

Outre les caractéristiques évoquées dans le paragraphe précédent, le dispositif grossissant selon l'invention peut présenter une ou plusieurs caractéristiques complémentaires parmi les suivantes, considérées individuellement ou selon toutes les combinaisons techniquement possibles :
- ladite deuxième lentille et ledit chariot mobile sont monobloc ;
- le dispositif grossissant comporte des moyens configurés pour modifier la position angulaire du chariot mobile entre la position rétractée et la position déployée de ladite deuxième lentille lors du déplacement de la glissière de chariot par l'utilisateur ;
- ladite glissière de chariot coulisse dans un ensemble de rainures de guidage de glissière ménagées dans l'épaisseur de la paroi de ladite coque externe ;
- lesdites rainures de guidage de glissière dudit ensemble sont rectilignes ;
- ladite glissière de chariot est solidaire du chariot mobile par un axe de guidage formant une liaison pivot ;
- ledit chariot mobile comporte des organes de guidage coopérant avec un ensemble de rainures de guidage de chariot ménagées dans l'épaisseur de la paroi de la coque externe, ledit ensemble de rainures de guidage de chariot étant configurées pour modifier la position angulaire dudit chariot mobile lors du déplacement de ladite glissière de chariot par l'utilisateur ;
- lesdites rainures de guidage de chariot dudit ensemble comporte une première branche rectiligne, une portion centrale incurvée et une deuxième branche rectiligne ;
- en position déployée, la deuxième lentille est concentrique avec la première lentille et positionnée à une distance d de ladite première lentille ;
- la première lentille présente une distance focale f1 de 100 mm et la deuxième lentille présente une distance focale f2 de 27 mm ;
- la première lentille est montée au niveau de ladite première extrémité de ladite coque externe au moyen d'une bague de maintien amovible ;
- la coque externe est formée par deux demi-coques assemblées et solidarisées entre elles, préférentiellement par collage ;
- ledit dispositif grossissant comporte une troisième lentille mobile entre une position rétractée et une position déployée dans laquelle ladite troisième lentille se superpose à ladite première lentille et/ou à ladite deuxième lentille de manière à modifier les caractéristiques optiques du dispositif grossissant ;
- ledit dispositif grossissant comporte une fente d'aération pour éviter la formation de buée au niveau desdites lentilles, et/ou une ouverture dans la coque externe permettant à l'utilisateur d'avoir une fenêtre de visualisation sans grossissement.

Avantageusement, le dispositif grossissant est une loupe monoculaire de type loupe d'horloger.

### Brève description des figures

Les buts, avantages et caractéristiques de la présente invention apparaîtront à la lecture de la description détaillée ci-dessous faisant référence aux figures suivantes :
- la figure 1 représente schématiquement une vue en perspective d'un exemple de réalisation d'un dispositif grossissant, de type loupe monoculaire, selon l'invention ;
- la figure 2 représente schématiquement une vue éclatée du dispositif grossissant, de type loupe monoculaire, illustré à la figure 1 ;
- la figure 3 est une représentation partielle en vue de côté du dispositif grossissant illustré à la figure 1 dans laquelle une demi-coque n'est pas représentée ; la figure 3 représente un premier état du dispositif grossissant dans lequel la lentille additionnelle est rétractée ;

- la figure 4 est une vue en perspective du dispositif grossissant illustré à la figure 3 ;
- la figure 5 est une représentation partielle en vue de côté du dispositif grossissant illustré à la figure 1 dans laquelle une demi-coque n'est pas représentée ; la figure 5 représente un deuxième état du dispositif grossissant dans lequel la lentille additionnelle est déployée ;
- la figure 6 est une vue en perspective du dispositif grossissant illustré à la figure 5 ;
- la figure 7 est une vue en perspective d'un chariot mobile du dispositif grossissant selon l'invention permettant le déploiement de la lentille additionnelle ;
- la figure 8 est une vue schématique d'une variante de réalisation du dispositif grossissant selon l'invention ;
- la figure 9 est une autre vue en perspective de l'exemple de réalisation d'un dispositif grossissant illustré à la figure 1 permettant d'illustrer une lumière autorisant l'actionnement d'une glissière de chariot pour le déploiement ou le repli de la lentille additionnelle.

Dans toutes les figures, les éléments communs portent les mêmes numéros de référence sauf précision contraire.

### Description détaillée de l'invention

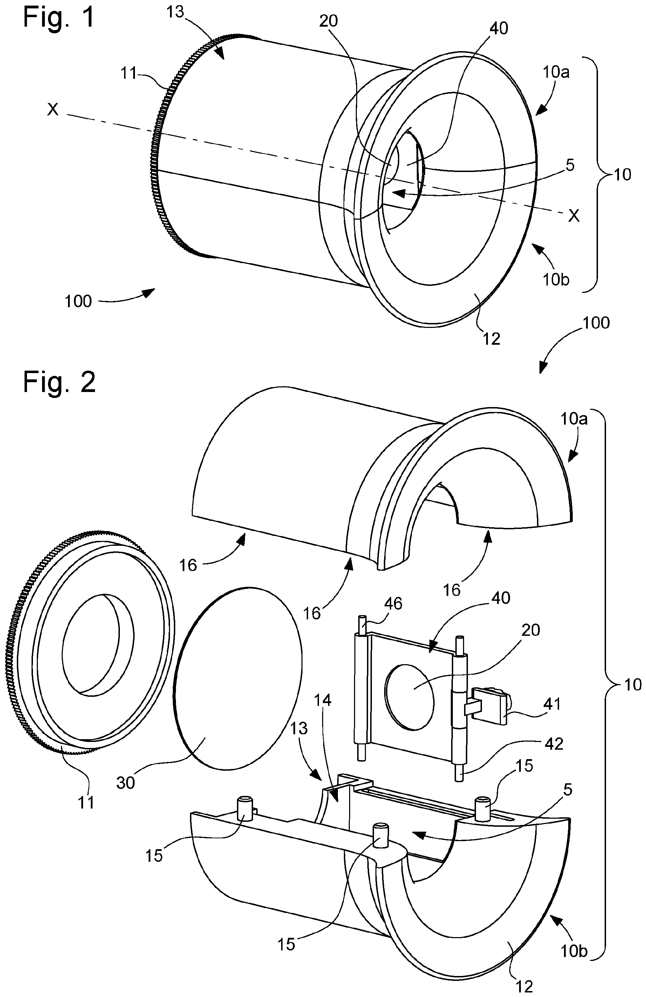

La figure 1 représente schématiquement une vue en perspective d'un exemple de réalisation d'un dispositif grossissant 100 selon l'invention.

La figure 2 représente schématiquement une vue éclatée du dispositif grossissant 100 selon l'invention. La vue éclatée permet ainsi d'apprécier les différents éléments constituant le dispositif grossissant 100 selon l'invention.

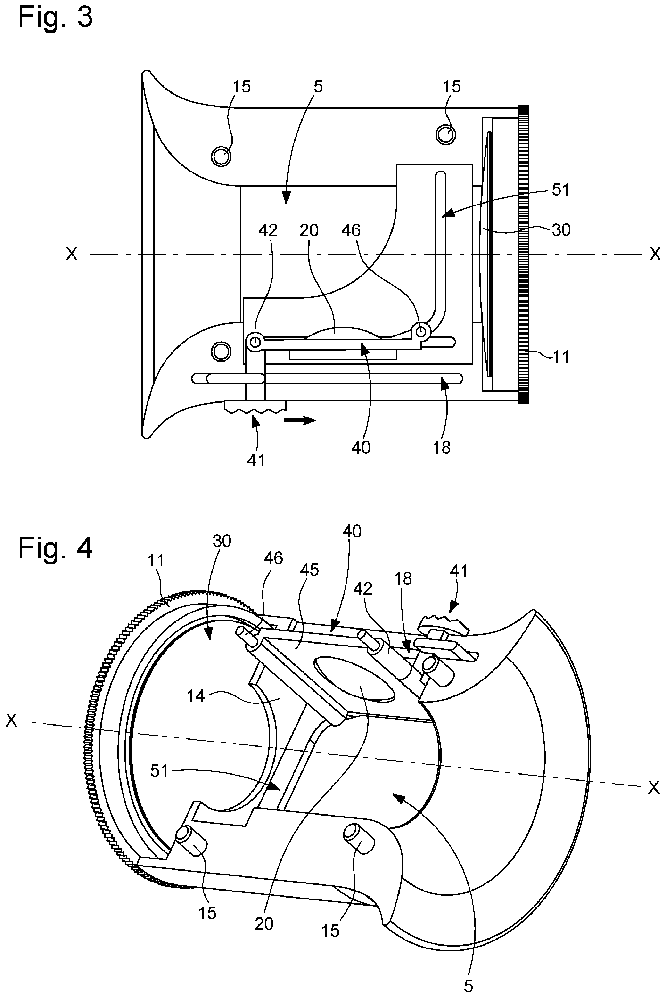

La figure 3 est une représentation partielle en vue de côté du dispositif grossissant 100 selon l'invention, dans laquelle une demi-coque de la coque externe n'est pas représentée ; la figure 3 représente ainsi un premier état du dispositif grossissant dans lequel la lentille additionnelle est rétractée.

La figure 4 est une vue en perspective du dispositif grossissant illustré à la figure 3.

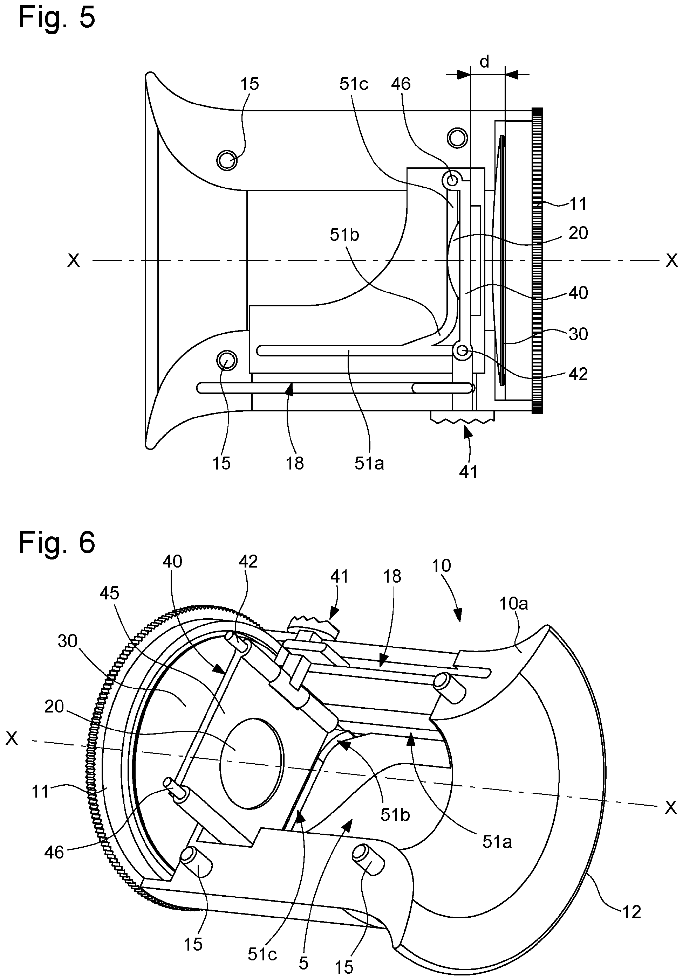

La figure 5 est une représentation partielle en vue de côté du dispositif grossissant 100 selon l'invention, dans laquelle une demi-coque de la coque externe n'est pas représentée ; la figure 5 représente ainsi un deuxième état du dispositif grossissant dans lequel la lentille additionnelle est déployée.

La figure 6 est une vue en perspective du dispositif grossissant illustré à la figure 5.

En référence aux figures 1 à 6, le dispositif grossissant 100 est une loupe monoculaire de type loupe d'horloger.

Le dispositif grossissant 100 comporte une coque externe 10 formant un corps de révolution creux d'axe de révolution X-X présentant une cavité interne 5 permettant à l'utilisateur d'observer un élément de petites dimensions ou un composant horloger au travers d'une lentille de grossissement.

Préférentiellement, la coque externe 10 est formée par deux demi-coques 10a, 10b assemblées et solidarisées l'une à l'autre.

Les deux demi-coques 10a, 10b sont assemblées l'une à l'autre via des moyens d'assemblage. Les moyens d'assemblage sont constitués par des pions d'assemblage 15, formant les parties mâles des moyens d'assemblage, et par des logements 16 coopérant avec les pions d'assemblage 15, formant les parties femelles des moyens d'assemblage et qui sont ménagés au niveau de la demi-coque en vis-à-vis de celle comportant les pions d'assemblage 15.

Dans l'exemple de réalisation illustré aux figues 1 à 6, les pions d'assemblage 15 (trois sont représentés à titre d'exemple) sont ménagés au niveau d'une même demi-coque, particulièrement la demi-coque référencée 10b, et les logements 16 sont ménagés sur l'autre demi-coque 10a positionnée en vis-à-vis.

Toutefois, d'autres modes de réalisation sont également possibles sans sortir du contexte de l'invention, notamment en prévoyant une répartition des pions d'assemblage 15 et des logements sur chacune des deux demi-coques.

Préférentiellement les deux demi-coques 10a, 10b sont solidarisées l'une à l'autre par collage. D'autres méthodes de solidarisation sont possibles comme par exemple le clipsage, ou l'utilisation d'un manchon de maintien. Le thermo-soudage est aussi possible selon les matériaux utilisés pour les demi-coques.

Préférentiellement, la coque externe 10 est réalisée à base de matière polymère, par exemple de matière plastique, à base de matière métallique, à base de matière céramique, à base de matière végétale comme du bois ou du bambou, ou encore d'un mélange de plusieurs matériaux.

La coque externe 10 est par exemple réalisée par un procédé d'injection ou d'impression en trois dimensions.

De manière classique, la coque externe 10 forme le fût du dispositif grossissant 100 permettant à l'utilisateur d'observer un élément de petites dimensions ou un composant horloger au travers de la coque externe 10.

La coque externe 10 comporte une première extrémité évasée 12 formant une interface adaptée pour le positionnement du dispositif grossissant 100 au niveau de la région de l'œil de l'utilisateur.

La coque externe 10 comporte une deuxième extrémité 13 portant une première lentille 30, dite lentille fixe. La première lentille 30 est maintenue en position au niveau de la deuxième extrémité 13 par l'intermédiaire d'une bague de maintien 11.

La bague de maintien 11 est une bague avantageusement amovible. La bague de maintien 11 est par exemple une bague vissée coopérant avec un filetage ménagé au niveau de la deuxième extrémité 13 de la coque externe 10.

La bague de maintien 11 permet ainsi un maintien en position de la première lentille 30 contre un flasque d'extrémité 14 formant une surface de réception de la première lentille 30.

La bague de maintien 11 permet également d'avoir une fonction de maintien des deux demi-coques 10a, 10b entre elles en exerçant une contrainte de serrage.

Selon d'autres variantes de réalisation, la bague de maintien 11 peut également être une bague emboitée sur la coque externe 10, par exemple par déformation viscoélastique de la bague, ou encore par un emboitage élastique de la bague de maintien 11 via des clips élastiques.

De telles variantes sont à la portée de l'homme du métier sans qu'il soit nécessaire de les expliciter davantage.

La bague de maintien 11 amovible permet de pouvoir accéder facilement à la première lentille 30, par exemple pour procéder à un nettoyage de celle-ci ou encore à un remplacement si besoin.

Par exemple, la bague de maintien 11 est réalisée en matière polymère ou encore en matière métallique. A titre d'exemple, la bague de maintien 11 peut être en matière plastique, ou encore en élastomère. L'utilisation d'une bague 11 en matière métallique sera privilégiée pour une finition plus haut de gamme du dispositif grossissant 100.

Selon une variante de réalisation (non représentée), il est également possible de supprimer une telle bague de maintien amovible. Dans ce cas, la première lentille 30 est positionnée lors de l'assemblage des deux demi-coques 10a, 10b, dans deux demi-logements circulaires prévus à cet effet au niveau de la deuxième extrémité 13 de la coque externe 10, les deux demi-logements circulaires étant aptes à maintenir en position la première lentille 30 en vis-à-vis du trajet optique du dispositif grossissant 100 une fois les deux demi-coques 10a, 10b assemblées.

La première lentille 30 est une lentille convexe. La première lentille 30 est préférentiellement une lentille mince.

La première lentille 30 présente une première distance focale f1 et un premier grossissement G1.

Le dispositif grossissant 100 selon l'invention comporte également une deuxième lentille 20, dite lentille mobile. La deuxième lentille est mobile entre une position rétractée et une position déployée, ou d'utilisation, dans laquelle la deuxième lentille 20 se superpose à la première lentille de manière à modifier les caractéristiques optiques du dispositif grossissant 100, et notamment le grossissement du dispositif grossissant 100. En position déployée, l'axe optique de la deuxième lentille 20 est parallèle à l'axe de révolution du dispositif grossissant 100.

La deuxième lentille 20 est donc une lentille additionnelle qui vient modifier, à la demande de l'utilisateur, les caractéristiques optiques du dispositif grossissant 100.

La deuxième lentille 20 est une lentille convexe. La deuxième lentille 20 est préférentiellement une lentille mince.

La deuxième lentille 20 présente une deuxième distance focale f2 et un deuxième grossissement G2.

La deuxième lentille 20 est avantageusement intégrée et logée dans la structure de la coque externe 10, i.e. au niveau de la cavité interne 5, de sorte qu'elle est positionnée et mobile à l'intérieur de la coque externe 10.

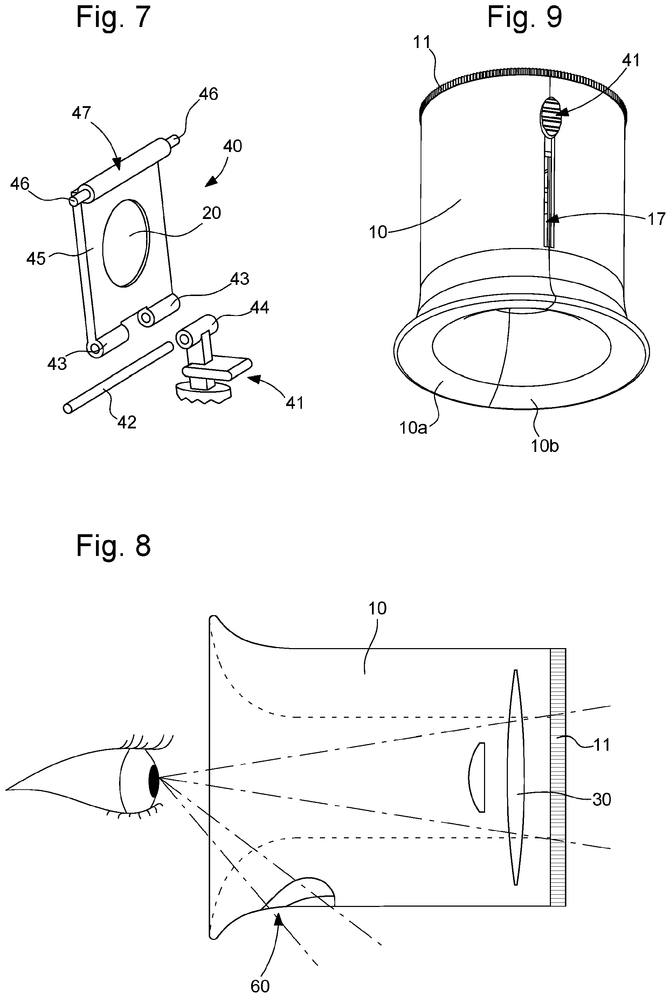

La deuxième lentille 20 est solidaire d'un chariot mobile 40 qui est actionnable par l'utilisateur via une glissière de chariot 41 comportant une portion d'interface accessible depuis l'extérieur du dispositif grossissant 100. La coque externe 10 comporte une lumière 17 permettant le coulissement de la glissière de chariot 41. La lumière 17 est plus spécifiquement représentée sur la vue de la figure 9.

Le coque externe 10 présente un ensemble de rainures de guidage de glissière 18, une rainure de guidage de glissière 18 étant ménagée au niveau de chacune des demi-coques 10a, 10b, et plus particulièrement dans l'épaisseur de la paroi de la coque externe 10. Les rainures de guidage de glissière 18 forment des coulisses pour le guidage et le coulissement de la glissière de chariot 41. Les rainures de guidage de glissière 18 sont rectilignes et positionnées en regard de l'une de l'autre.

Ainsi, sous l'action de l'utilisateur, la glissière de chariot 41, et notamment le corps de la glissière de chariot 41, est apte à coulisser dans les rainures de guidage de glissière 18 entre une première position, dite position non activée, illustrée particulièrement aux figures 3 et 4, dans laquelle le chariot mobile 40 et la deuxième lentille 20 sont rétractés, et une deuxième position, dite position activée, illustrée aux figures 5 et 6, dans laquelle le chariot mobile 40 et la deuxième lentille 20 sont déployés, positionnant la deuxième lentille 20 parallèlement à la première lentille 30, et à une certaine distance d de celle-ci.

Ainsi, le dispositif grossissant 100 comporte des moyens configurés pour modifier la position angulaire du chariot mobile 40 entre la position rétractée et la position déployée lors du déplacement de la glissière de chariot 41 par l'utilisateur.

Comme visible à la figure 7, illustrant plus particulièrement le chariot mobile du dispositif grossissant 100 selon l'invention permettant le déploiement de la lentille additionnelle, le chariot mobile 40 comporte une platine 45 sur laquelle est maintenue solidaire la deuxième lentille 20, par exemple par emboitage, collage, etc.

La glissière de chariot 41 est solidaire du chariot mobile 40 au niveau d'une première extrémité de la platine 45 formant une liaison pivot, de type charnière, avec la glissière de chariot 41. La glissière de chariot 41 est solidarisée au chariot mobile 40 via un axe de guidage 42 formant également un axe de pivotement.

Au niveau de la première extrémité de la platine 45 formant la jonction avec la glissière de chariot 41, la platine 45 comporte un nombre pair de noeuds femelles 43 (deux noeuds femelles 43 étant représentés dans l'exemple de réalisation de la figure 7) et la glissière de chariot 41 présente un nombre impair de noeuds mâles, un unique noeud mâle 44 étant représenté coopérant avec les deux noeuds femelles 43.

Au niveau de la deuxième extrémité 47, la platine 45 comporte deux tétons de guidage 46.

Selon une première variante de réalisation, les tétons de guidage 46 sont monoblocs avec la platine 45.

Selon une deuxième variante de réalisation, les tétons de guidage 46 sont formés par un axe de guidage indépendant de la platine 45 et inséré dans un alésage traversant prévu à cet effet au niveau de l'extrémité de la platine 45.

Les extrémités de l'axe de guide 42 et les tétons de guidage 46 forment ainsi des organes de guidage du chariot mobile 40.

Les organes de guidage du chariot mobile 40 coopèrent avec un ensemble de rainures de guidage de chariot 51, chaque demi-coque 10a, 10b comportant une rainure de guidage de chariot 51.

Les rainures de guidage de chariot 51 sont des rainures incurvées permettant modifier la position angulaire du chariot mobile tout en permettant un déplacement de celui-ci lors du déplacement de la glissière de chariot 41 et donc de la première extrémité de la platine 45. Selon l'invention, les mouvements de translation de la glissière de chariot 41 sont transmis au niveau d'une extrémité du chariot mobile 40 de manière à autoriser un basculement et une rotation de celui-ci.

Typiquement, les rainures de guidage de chariot 51 présentent une première branche rectiligne 51a, une portion centrale incurvée 51b et une deuxième branche rectiligne 51c.

Préférentiellement, les premières branches rectilignes 51a et les deuxièmes branches rectilignes 51c s'étendent selon deux directions perpendiculaires de manière à permettre un pivotement à 90° du chariot mobile 40 entre la position rétractée et la position déployée.

Les premières branches rectilignes 51a des rainures de guidage de chariot 51 reçoivent les extrémités de l'axe de guidage 42 du chariot mobile 40. Les premières branches rectilignes 51a comportent une première extrémité et une deuxième extrémité formant des butées aux déplacements de l'axe de guidage 42.

Les portions centrales incurvée 51b et les deuxièmes branches rectilignes 51c reçoivent les tétons de guidage 46 de la deuxième extrémité de la platine 45 du chariot mobile 40.

Le fonctionnement dispositif grossissant 100 est le suivant: lorsque la glissière de chariot 41 est en position inactivée, le chariot mobile 40 est en position rétractée. Il est avantageusement positionné dans un logement ménagé dans l'épaisseur de la paroi périphérique du corps externe 10, de sorte qu'en position rétractée, le chariot mobile 40 et la deuxième lentille 20 ne sont pas sur la trajectoire des rayons lumineux et n'obstruent pas le champ de vision. Cette position est illustrée aux figures 3 et 4.

Dans cette position, l'axe de guidage 42 est en butée contre une première extrémité de la première branche rectiligne 51a, et plus particulièrement contre l'extrémité la plus proche de la première extrémité évasée 12 de la coque externe 10.

Dans cette position, les tétons de guidage 46 sont dans la partie inférieure de la portion centrale incurvée 51b, i.e. proche de la jonction entre la première branche rectiligne 51a et la portion centrale incurvée 51b, comme illustré à la figure 3.

Dans cette position rétractée du chariot mobile 40, l'axe optique de la deuxième lentille 20 n'est pas aligné avec l'axe optique de la première lentille 30. Dans cette position rétractée du chariot mobile 41, l'axe optique de la deuxième lentille 20 est sensiblement perpendiculaire à l'axe optique de la première lentille 30.

Dans cette position rétractée du chariot mobile, le grossissement du dispositif grossissant 100 correspond au grossissement G1 de la première lentille 30.

Lorsque l'utilisation coulisse la glissière de chariot 41, selon la flèche illustrée sur la figure 3, par exemple en éloignant la glissière de chariot 41 de la première extrémité évasée 12 de la coque externe 10, la translation de la glissière de chariot 41 va permettre la rotation du chariot mobile 40 par l'intermédiaire des tétons de guidage 46 et de la portion incurvée centrale 51b des rainures de guidage de chariot 51 et le déploiement de celui-ci dans la cavité interne de la coque externe 10.

Lorsque le chariot mobile 40 est en position déployée, l'axe de guidage 42 est en butée contre la deuxième extrémité de la première branche rectiligne 51a, et plus particulièrement contre l'extrémité la plus éloignée de la première extrémité évasée 12 de la coque externe 10.

Dans cette position, les tétons de guidage 46 sont à proximité de l'extrémité de la deuxième portion rectiligne 51c, voire en butée contre cette extrémité, comme illustré à la figure 5.

Lorsque le chariot mobile 40 est en position déployée, le chariot mobile 40 et la deuxième lentille 20 sont sur la trajectoire des rayons lumineux.

Dans cette position déployée du chariot mobile 40, l'axe optique de la deuxième lentille 20 est parallèle avec l'axe optique de la première lentille 30, et préférentiellement les axes optiques des deux lentilles sont confondus et les lentilles 20, 30 concentriques.

Ainsi, lorsque le chariot mobile 40 est en position déployée, le grossissement du dispositif grossissant 100 est modifié, préférentiellement augmenté.

La distance d entre les deux lentilles 20, 30 est configurée par le positionnement de l'ensemble des deuxièmes rainures de guidage 51 et notamment de la position de la deuxième branche rectiligne 51c par rapport à la première lentille 30.

A titre d'exemple, avec une première lentille de focale f1 de 100mm, le dispositif grossissant présente un grossissement de 2,5X. Avec la deuxième lentille 20 de focale f2 de 27mm déployée venant s'ajouter à la première lentille 30, le grossissement du dispositif grossissant devient 15X. Dans cette configuration, la distance d entre les deux lentilles 20, 30 est de 1,46 mm.

Avantageusement, le dispositif grossissant 100 selon l'invention présente des dimensions relativement proches d'une loupe d'horloger classique avec une unique lentille, de sorte que l'utilisateur ne sera pas perturbé par son utilisation en remplacement des loupes monoculaires classiques de l'état de la technique.

Selon une variante de réalisation de l'invention, le chariot mobile 40 et la deuxième lentille 20 forme un ensemble monobloc, c'est-à-dire formé à partir d'un seul élément de même matière. Dans ce cas, l'ensemble monobloc est avantageusement une lentille sphérique à section rectangulaire comportant au niveau d'une première extrémité les noeuds femelles 43 décrits précédemment, et au niveau d'une deuxième extrémité les tétons de guidage 46 décrits précédemment. L'ensemble monobloc pourra alors être rétracté et déployé de manière identique au chariot mobile décrit précédemment.

Une telle variante de réalisation permet notamment minimiser le nombre de pièces, et de réduire l'encombrement de l'ensemble chariot mobile 40/deuxième lentille 20. Avec un encombrement plus réduit, on maximise le champ de vision de l'utilisateur en augmentant le diamètre de la cavité interne 5, par réduction de l'épaisseur de la paroi périphérique du corps externe 10, et donc du logement ménagé dans l'épaisseur de la paroi périphérique du corps externe 10.

Un tel ensemble monobloc peut être réalisé en verre, par exemple par usinage, ou encore en matière polymère, par exemple en Polyméthacrylate de méthyle (PMMA), également connu sous le nom de plexiglass, ou encore en polycarbonate.

Le dispositif grossissant 100 selon l'invention peut également comporter une troisième lentille rétractable au même titre que la deuxième lentille, de manière à pouvoir avoir quatre valeurs différentes de grossissement avec un même et unique dispositif grossissant.

Comme illustré à la figure 8, selon une variante de réalisation de l'invention, le dispositif grossissant 100 peut comporter de manière additionnelle une fente d'aération permettant d'éviter la formation de buée au niveau des différentes lentilles du dispositif grossissant selon l'invention, ou encore une ouverture 60 permettant à l'utilisateur de visualiser des éléments à proximité sans grossissement et sans avoir besoin de retirer le dispositif grossissant 100.

## Revendications

1. Dispositif grossissant (100) à grossissement multiple comportant :
- une coque externe (10) formant un corps de révolution d'axe de révolution (X-X) et présentant une cavité interne (5),
- une première lentille (30) montée au niveau d'une première extrémité (13) de ladite coque externe (10),
ledit dispositif grossissant (100) étant **caractérisé en ce qu'**il comporte une deuxième lentille (20) mobile entre une position rétractée et une position déployée dans laquelle ladite deuxième lentille (20) se superpose à ladite première lentille (30) de manière à modifier les caractéristiques optiques du dispositif grossissant (100) ;
ladite deuxième lentille (20) étant solidaire d'un chariot mobile (40) actionnable par l'utilisateur via une glissière de chariot (41) ;
ladite deuxième lentille étant logée au niveau de ladite cavité interne (5) de ladite coque externe (10) aussi bien dans sa position rétractée que dans sa position déployée.

2. Dispositif grossissant (100) à grossissement multiple selon la revendication précédente, **caractérisé en ce que** ladite deuxième lentille (20) et ledit chariot mobile (40) sont monobloc.

3. Dispositif grossissant (100) à grossissement multiple selon l'une des revendications 1 à 2, **caractérisé en ce que** le dispositif grossissant (100) comporte des moyens configurés pour modifier la position angulaire du chariot mobile (40) entre la position rétractée et la position déployée de ladite deuxième lentille (20) lors du déplacement de la glissière de chariot (41) par l'utilisateur.

4. Dispositif grossissant (100) à grossissement multiple selon l'une des revendications 1 à 3, **caractérisé en ce que** ladite glissière de chariot (41) coulisse dans un ensemble de rainures de guidage de glissière (18) ménagées dans l'épaisseur de la paroi de ladite coque externe (10).

5. Dispositif grossissant (100) à grossissement multiple selon la revendication 4, **caractérisé en ce que** lesdites rainures de guidage de glissière (18) dudit ensemble sont rectilignes.

6. Dispositif grossissant (100) à grossissement multiple selon l'une des revendications 3 à 5, **caractérisé en ce que** ladite glissière de chariot (41) est solidaire du chariot mobile (40) par un axe de guidage (42) formant une liaison pivot.

7. Dispositif grossissant (100) à grossissement multiple selon l'une des revendications 3 à 6, **caractérisé en ce que** ledit chariot mobile (40) comporte des organes de guidage (42, 46) coopérant avec un ensemble de rainures de guidage de chariot (51) ménagées dans l'épaisseur de la paroi de la coque externe (10), ledit ensemble de rainures de guidage de chariot (51) étant configurées pour modifier la position angulaire dudit chariot mobile (40) lors du déplacement de ladite glissière de chariot (41) par l'utilisateur.

8. Dispositif grossissant (100) à grossissement multiple selon la revendication précédente, **caractérisé en ce que** lesdites rainures de guidage de chariot (51) dudit ensemble comporte une première branche rectiligne (51a), une portion centrale incurvée (51b) et une deuxième branche rectiligne (51c).

9. Dispositif grossissant (100) à grossissement multiple selon l'une des revendications précédentes, **caractérisé en ce qu'**en position déployée la deuxième lentille (20) est concentrique avec la première lentille (30) et positionnée à une distance d de ladite première lentille (30).

10. Dispositif grossissant (100) à grossissement multiple selon l'une des revendications précédentes, **caractérisé en ce que** la première lentille présente une distance focale f1 de 100 mm et **en ce que** ladite deuxième lentille (20) présente une distance focale f2 de 27 mm.

11. Dispositif grossissant (100) à grossissement multiple selon l'une des revendications précédentes, **caractérisé en ce que** ladite première lentille (30) est montée au niveau de ladite première extrémité (13) de ladite coque externe (10) au moyen d'une bague de maintien (11) amovible.

12. Dispositif grossissant (100) à grossissement multiple selon l'une des revendications précédentes, **caractérisé en ce que** ladite coque externe (10) est formée par deux demi-coques (10a, 10b) assemblées et solidarisées entre elles.

13. Dispositif grossissant (100) à grossissement multiple selon l'une des revendications précédentes, **caractérisé en ce que** ledit dispositif grossissant (100) comporte une troisième lentille mobile entre une position rétractée et une position déployée dans laquelle ladite troisième lentille se superpose à ladite première lentille (30) et/ou à ladite deuxième lentille (20) de manière à modifier les caractéristiques optiques du dispositif grossissant (100).

14. Dispositif grossissant (100) à grossissement multiple selon l'une des revendications précédentes, **caractérisé en ce que** ledit dispositif grossissant (100) comporte une fente d'aération pour éviter la formation de buée au niveau desdites lentilles (20, 30), et/ou une ouverture (60) dans la coque externe permettant à l'utilisateur d'avoir une fenêtre de visualisation sans grossissement.

## Patentansprüche

1. Vergrößerungsvorrichtung (100) mit mehrfacher Vergrößerung, die beinhaltet:
- ein äußeres Gehäuse (10), das einen Rotationskörper mit einer Rotationsachse (X-X) bildet und einen inneren Hohlraum (5) aufweist,
- eine erste Linse (30), die im Bereich eines ersten Endes (13) des äußeren Gehäuses (10) montiert ist,
wobei die Vergrößerungsvorrichtung (100) **dadurch gekennzeichnet ist, dass** sie eine zweite Linse (20) beinhaltet, die zwischen einer eingezogenen Position und einer ausgefahrenen Position beweglich ist, in der die zweite Linse (20) die erste Linse (30) überlagert, um die optischen Eigenschaften der Vergrößerungsvorrichtung (100) zu verändern;
wobei die zweite Linse (20) fest mit einem beweglichen Schlitten (40) verbunden ist, der vom Benutzer über eine Schlittenführung (41) betätigbar ist;
wobei die zweite Linse im Bereich des inneren Hohlraums (5) des äußeren Gehäuses (10) sowohl in ihrer eingezogenen, als auch in ihrer ausgefahrenen Position untergebracht ist.

2. Vergrößerungsvorrichtung (100) mit mehrfacher Vergrößerung nach dem vorstehenden Anspruch, **dadurch gekennzeichnet, dass** die zweite Linse (20) und der bewegliche Schlitten (40) einteilig sind.

3. Vergrößerungsvorrichtung (100) mit mehrfacher Vergrößerung nach einem der Ansprüche 1 bis 2, **dadurch gekennzeichnet, dass** die Vergrößerungsvorrichtung (100) Mittel beinhaltet, die konfiguriert sind, um die Winkelposition des beweglichen Schlittens (40) zwischen der eingezogenen Position und der ausgefahrenen Position der zweiten Linse (20) beim Verschieben der Schlittenführung (41) durch den Benutzer zu verändern.

4. Vergrößerungsvorrichtung (100) mit mehrfacher Vergrößerung nach einem der Ansprüche 1 bis 3, **dadurch gekennzeichnet, dass** die Schlittenführung (41) in einer Einheit von Schlittenführungsnuten (18) gleitet, die in der Dicke der Wand des äußeren Gehäuses (10) vorgesehen sind.

5. Vergrößerungsvorrichtung (100) mit mehrfacher Vergrößerung nach Anspruch 4, **dadurch gekennzeichnet, dass** die Schlittenführungsnuten (18) der Einheit geradlinig sind.

6. Vergrößerungsvorrichtung (100) mit mehrfacher Vergrößerung nach einem der Ansprüche 3 bis 5, **dadurch gekennzeichnet, dass** die Schlittenführung (41) über eine Führungsachse (42), die eine Schwenkverbindung bildet, fest mit dem beweglichen Schlitten (40) verbunden ist.

7. Vergrößerungsvorrichtung (100) mit mehrfacher Vergrößerung nach einem der Ansprüche 3 bis 6, **dadurch gekennzeichnet, dass** der bewegliche Schlitten (40) Führungsorgane (42, 46) beinhaltet, die mit einer Einheit von Schlittenführungsnuten (51) zusammenwirken, die in der Dicke der Wand des äußeren Gehäuses (10) vorgesehen sind, wobei die Einheit von Schlittenführungsnuten (51) konfiguriert ist, um die Winkelposition des beweglichen Schlittens (40) beim Verschieben der Schlittenführung (41) durch den Benutzer zu verändern.

8. Vergrößerungsvorrichtung (100) mit mehrfacher Vergrößerung nach dem vorstehenden Anspruch, **dadurch gekennzeichnet, dass** die Schlittenführungsnuten (51) der Einheit einen ersten geraden Zweig (51a), einen gekrümmten Mittelabschnitt (51b) und einen zweiten geraden Zweig (51c) beinhalten.

9. Vergrößerungsvorrichtung (100) mit mehrfacher Vergrößerung nach einem der vorstehenden Ansprüche, **dadurch gekennzeichnet, dass** die zweite Linse (20) in der ausgefahrenen Position konzentrisch mit der ersten Linse (30) ist und in einem Abstand d von der ersten Linse (30) positioniert ist.

10. Vergrößerungsvorrichtung (100) mit mehrfacher Vergrößerung nach einem der vorstehenden Ansprüche, **dadurch gekennzeichnet, dass** die erste Linse eine Brennweite f1 von 100 mm aufweist und dadurch, dass die zweite Linse (20) eine Brennweite f2 von 27 mm aufweist.

11. Vergrößerungsvorrichtung (100) mit mehrfacher Vergrößerung nach einem der vorstehenden Ansprüche, **dadurch gekennzeichnet, dass** die erste Linse (30) anhand eines abnehmbaren Halterings (11) im Bereich des ersten Endes (13) des äußeren Gehäuses (10) montiert ist.

12. Vergrößerungsvorrichtung (100) mit mehrfacher Vergrößerung nach einem der vorstehenden Ansprüche, **dadurch gekennzeichnet, dass** das äußere Gehäuse (10) aus zwei Halbgehäusen (10a, 10b) gebildet ist, die zusammengesetzt und fest miteinander verbunden sind.

13. Vergrößerungsvorrichtung (100) mit mehrfacher Vergrößerung nach einem der vorstehenden Ansprüche, **dadurch gekennzeichnet, dass** die Vergrößerungsvorrichtung (100) eine dritte Linse beinhaltet, die zwischen einer eingezogenen Position und einer ausgefahrenen Position beweglich ist, in der die dritte Linse die erste Linse (30) und/oder die zweite Linse (20) überlagert, um die optischen Eigenschaften der Vergrößerungsvorrichtung (100) zu verändern.

14. Vergrößerungsvorrichtung (100) mit mehrfacher Vergrößerung nach einem der vorstehenden Ansprüche, **dadurch gekennzeichnet, dass** die Vergrößerungsvorrichtung (100) einen Lüftungsschlitz beinhaltet, um das Bilden von Beschlag im Bereich der Linsen (20, 30) zu verhindern, und/oder eine Öffnung (60) im äußeren Gehäuse, die es dem Benutzer ermöglicht, ein Sichtfenster ohne Vergrößerung aufzuweisen.

## Claims

1. Magnifying device (100) with multiple magnifications comprising:
- an outer shell (10) forming a body of revolution with an axis of revolution (X-X) and having an inner cavity (5),
- a first lens (30) mounted at a first end (13) of said outer shell (10),
said magnifying device (100) being **characterised in that** it comprises a second lens (20) capable of moving between a retracted position and an extended position in which said second lens (20) is superimposed on said first lens (30) so as to change the optical characteristics of the magnifying device (100) ;
said second lens (20) being integral with a moving carriage (40) capable of being actuated by the user via a carriage guide rod (41) ;
said second lens being housed at said inner cavity (5) of said outer shell (10) in both the retracted and extended positions thereof.

2. Magnifying device (100) with multiple magnifications according to the preceding claim, **characterised in that** said second lens (20) and said moving carriage (40) are in one piece.

3. Magnifying device (100) with multiple magnifications according to one of claims 1 to 2, **characterised in that** the magnifying device (100) comprises means configured to change the angular position of the moving carriage (40) between the retracted position and the extended position of said second lens (20) upon the displacement of the carriage guide rod (41) by the user.

4. Magnifying device (100) with multiple magnifications according to one of claims 1 to 3, **characterised in that** said carriage guide rod (41) slides in a set of guide rod guiding grooves (18) formed in the thickness of the wall of said outer shell (10).

5. Magnifying device (100) with multiple magnifications according to claim 4, **characterised in that** said guide rod guiding grooves (18) of said set are rectilinear.

6. Magnifying device (100) with multiple magnifications according to one of claims 3 to 5, **characterised in that** said carriage guide rod (41) is made integral with the moving carriage (40) by a guide pin (42) forming a pivot link.

7. Magnifying device (100) with multiple magnifications according to one of claims 3 to 6, **characterised in that** said moving carriage (40) comprises guide members (42, 46) cooperating with a set of carriage guiding grooves (51) formed in the thickness of the wall of the outer shell (10), said set of carriage guiding grooves (51) being configured to change the angular position of said moving carriage (40) upon the displacement of said carriage guide rod (41) by the user.

8. Magnifying device (100) with multiple magnifications according to the preceding claim, **characterised in that** said carriage guiding grooves (51) of said set comprise a first rectilinear branch (51a), a curved central portion (51b) and a second rectilinear branch (51c).

9. Magnifying device (100) with multiple magnifications according to one of the preceding claims, **characterised in that** in the extended position, the second lens (20) is concentric with the first lens (30) and positioned at a distance d from said first lens (30).

10. Magnifying device (100) with multiple magnifications according to one of the preceding claims, **characterised in that** the first lens has a focal length f1 of 100 mm and **in that** said second lens (20) has a focal length f2 of 27 mm.

11. Magnifying device (100) with multiple magnifications according to one of the preceding claims, **characterised in that** said first lens (30) is mounted at said first end (13) of said outer shell (10) by means of a removable retaining ring (11).

12. Magnifying device (100) with multiple magnifications according to one of the preceding claims, **characterised in that** said outer shell (10) is formed by two half-shells (10a, 10b) assembled and made integral with one another.

13. Magnifying device (100) with multiple magnifications according to one of the preceding claims, **characterised in that** said magnifying device (100) comprises a third lens capable of moving between a retracted position and an extended position in which said third lens is superimposed on said first lens (30) and/or on said second lens (20) so as to change the optical characteristics of the magnifying device (100).

14. Magnifying device (100) with multiple magnifications according to one of the preceding claims, **characterised in that** said magnifying device (100) comprises a ventilation slot to prevent said lenses (20, 30) from fogging up, and/or an aperture (60) in the outer shell providing the user with a window for viewing without magnification.
